# EUROPEAN PATENT APPLICATION

(11) **EP 0 608 157 A1**
(43) Date of publication of application: **27.07.1994**
(21) Application number: 94400038.9
(22) Date of filing: 06.01.1994
(51) Int. Cl.: C08J 11/10, C08L 21/00

(54) **Fast process to reclaim cured or semi-cured rubber**

(30) Priority: 22.01.1993 BR 9300252
(71) Applicant: OLIVEIRA DA CUNHA LIMA, Luiz Carlos, 22460 Rio de Janeiro (BR)
(72) Inventor: OLIVEIRA DA CUNHA LIMA, Luiz Carlos, 22460 Rio de Janeiro (BR)
(74) Representative: Bloch, Gérard

(57) **Abstract**

Invention Patent for "Fast Process to Reclaim Cured or Semi-Cured Rubber" by means of having a proper solvent swollen rubber mass undergo through restrictions with or in deleterious or devulcanizing chemical elements.
The process can be applied in cold or at heat under pressures higher or lower than the atmospheric.
The process can be applied to any kind of cured or semi-cured rubber composition.

By the process described herein it results in a reclaimed product at lower prices than the ones resulting from dry or mills processed reclaimed product.

## Description

This invention pertains to a process to reclaim Cured or Semi-Cured Rubber by means of having a proper solvent swollen rubber mass undergo through restrict ions with or in deleterious or devulcanizing chemical elements.

All industrial process looks up to reduce its costs, increasing its efficiency, using cheaper raw materials, as well as to add value to its sub products. The recycling industry trend is to search for processes that accommodate used formulations ata a lower cost and improved quality. Obviously, the closer to the original formulation characteristics the better will be the resulting reclaimed product quality.

The process described in PI-8500981, portrays the use of deleterious agents over solvent swollen rubber masses. It describes the process of using mills in which the deleterious action of certain chemical products are used at the same time in which it is done the reduction of rubber particles.

This process has enabled the obtaining of a better quality reclaimed product for a smaller cost than the one using the same formulation and obtained under conventional processes in which heat is used as reclaiming agent (digestor or autoclave), along with mechanic grinding (refiner).

Further to patents and processes mentioned by Brazilian Patent PI-8500981, i.e.: Patents GB 1334718, US 2088920, US 4156508, BR 7606727 and GB 505156, another patent, deposited in Australia PC 9715, all use the swelling to weaken the rubber thus making it easier to segregate existing reinforcements therein, such as fibers and wires. The Australian process, though, do not reclaim the rubber, it only reduces the size of the particle to a level between 0.3 and 0.8 millimeters. The employment of rubber obtained under this process serves only as load in other formulations.

The instant invention refers to a total rubber (cured or semi-cured) reclaim process much faster than Brazilian Patent PI 8500981 since the rubber reclaim takes place with or in deleterious chemical elements, being processed at the same time of the particle reduction in the filtering stage, and not more in mills. When rubber goes through restrictions under pressure, it is reduced in size, and at the same time it is exposed to deleterious element, it being, subsequently decompressed to a lower pressure suffering a second break caused by the flash produced by the solvent which swells the rubber particle. If this operation is repeated with restrictions each time smaller in size the reclaim becomes each time greater, more homogeneous and with characteristics well closer than the original rubber formulation.

The employment of rubber devulcanizing agents activators of deleterious elements, modify the characteristics of the reclaim and speed the process. This way are applied devulcanizing agents: the guanidine and its derivatives as diphenylguanidine; hydrazine and its derivatives as phenyl hydrazine; phenyl amines as aniline etc. Other devulcanizing agents greatly used are the greasy acid derivatives, mixtures of the organo metallic complexes, the allogenated derivatives, as pentachlorothiobenzene, benzoic acid, ftalic anhydride etc. In this same operation sequences, where the rubber formulation is swollen and broken through restrictions other products can be added as plasticizers, resins, loads, antioxidants, accelerators, curing etc. The product thus obtained in an paste or thick oil is dried in appropriate drier, the solvent being recovered and capable of being recycled.

Sample # 1 It was prepared with the following Natural rubber formulation:

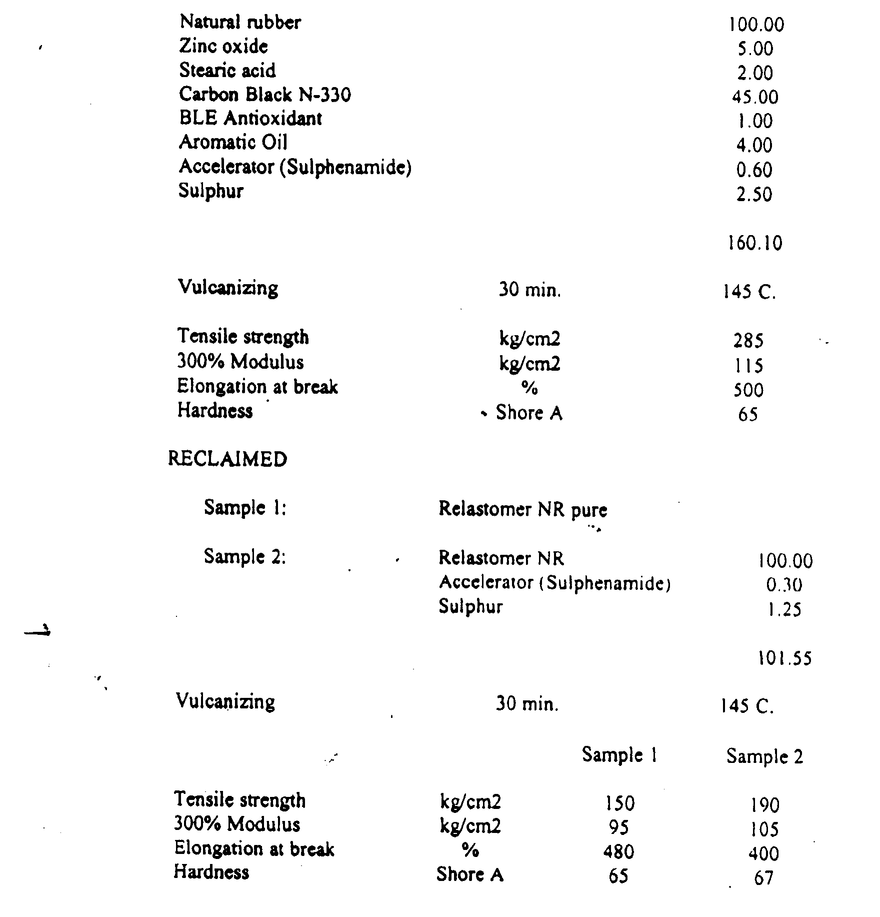

Sample # 2 It was prepared with the following Acrylonitrile rubber formulation:

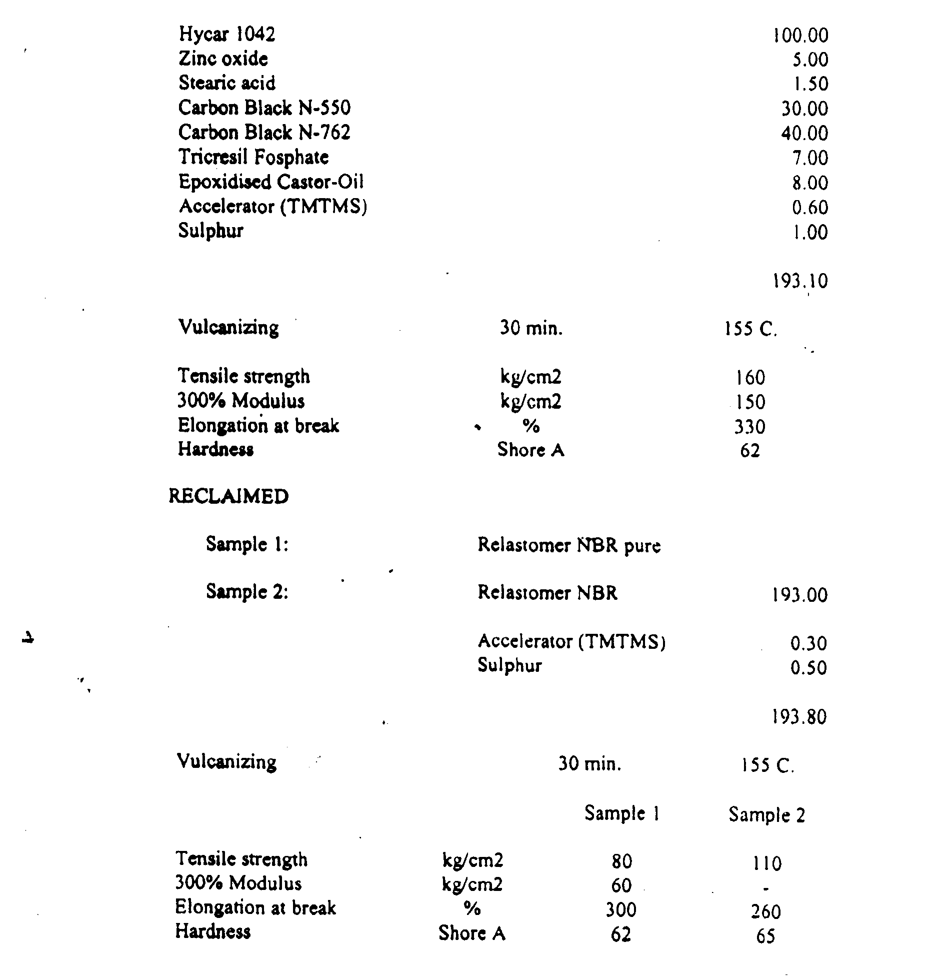

Sample # 3 It was prepared with the following CR rubber formulation:

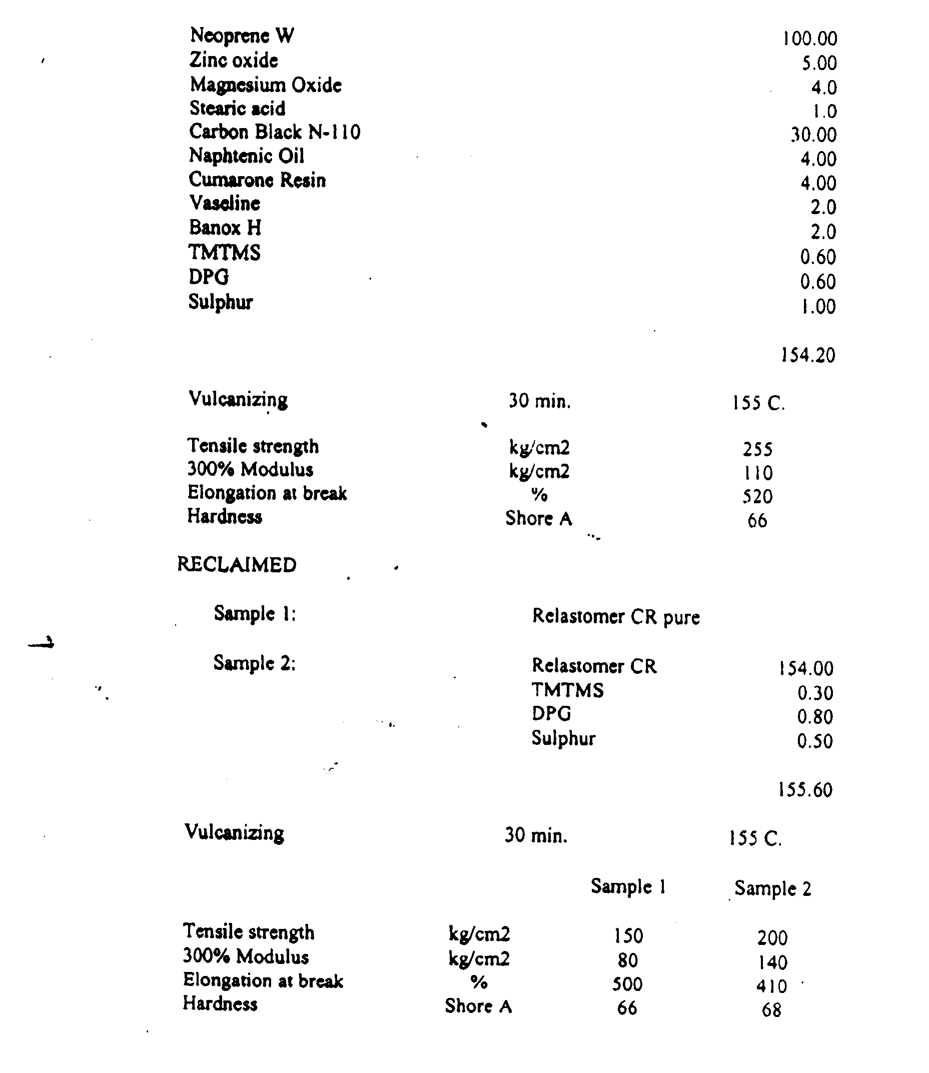

Sample # 4 It was prepared with the following SBR rubber formulation:

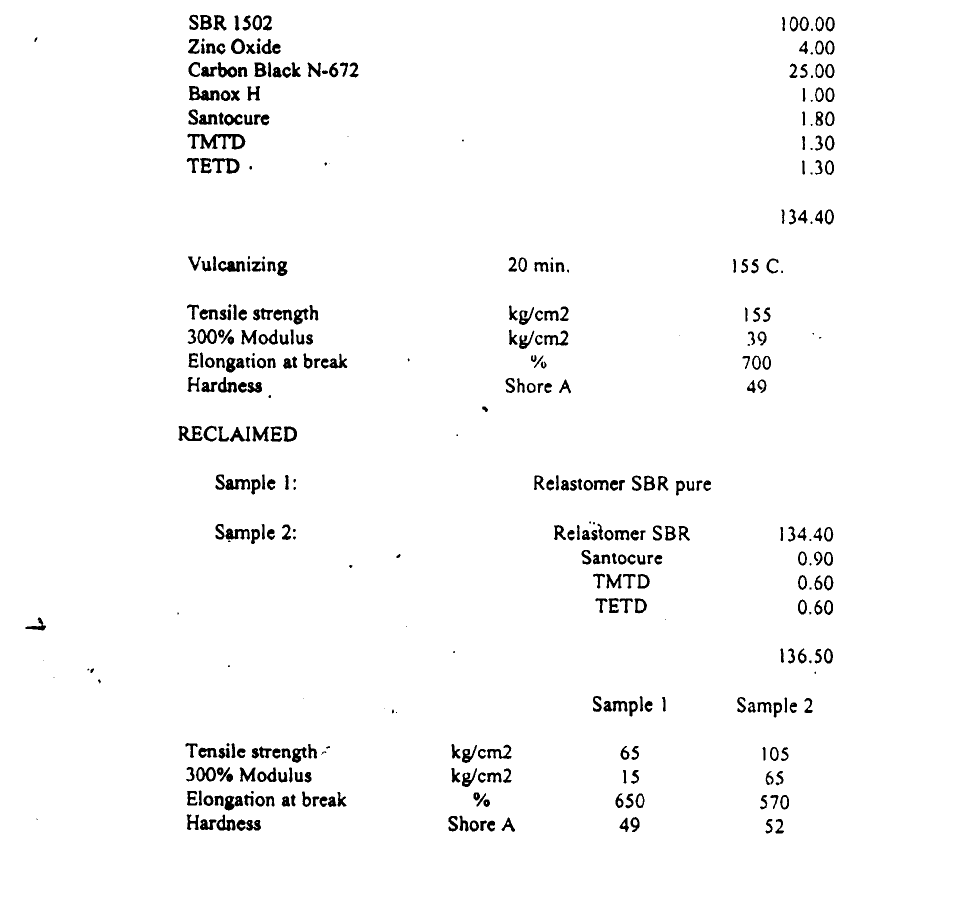

Sample # 5 It was prepared with the following Butyl rubber formulation:

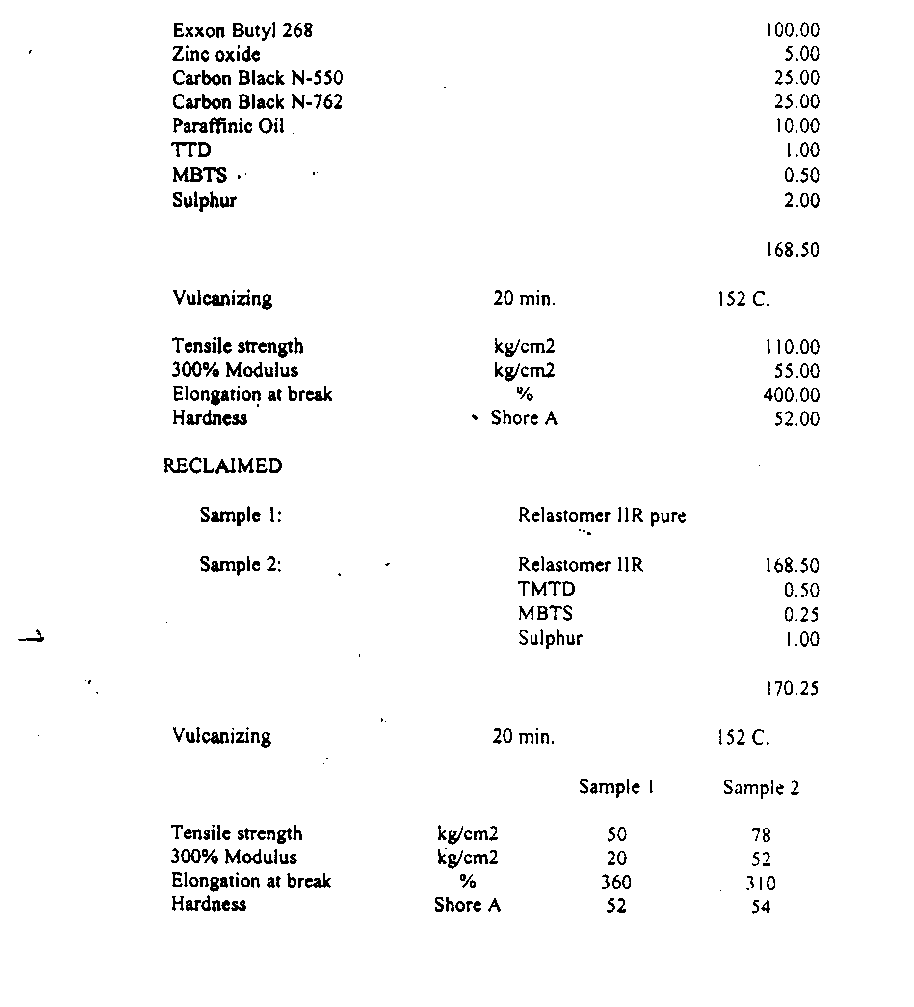

Sample # 6 It was prepared with the following BR rubber formulation:

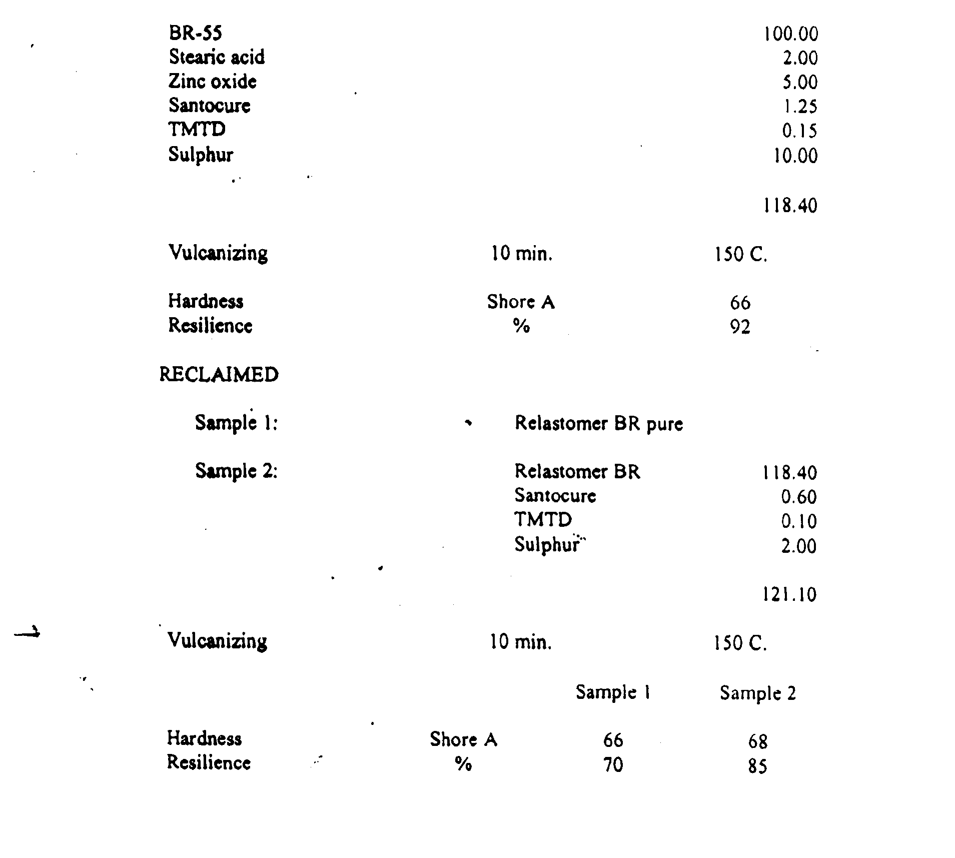

Sample # 7 It was prepared with the following CSM rubber formulation:

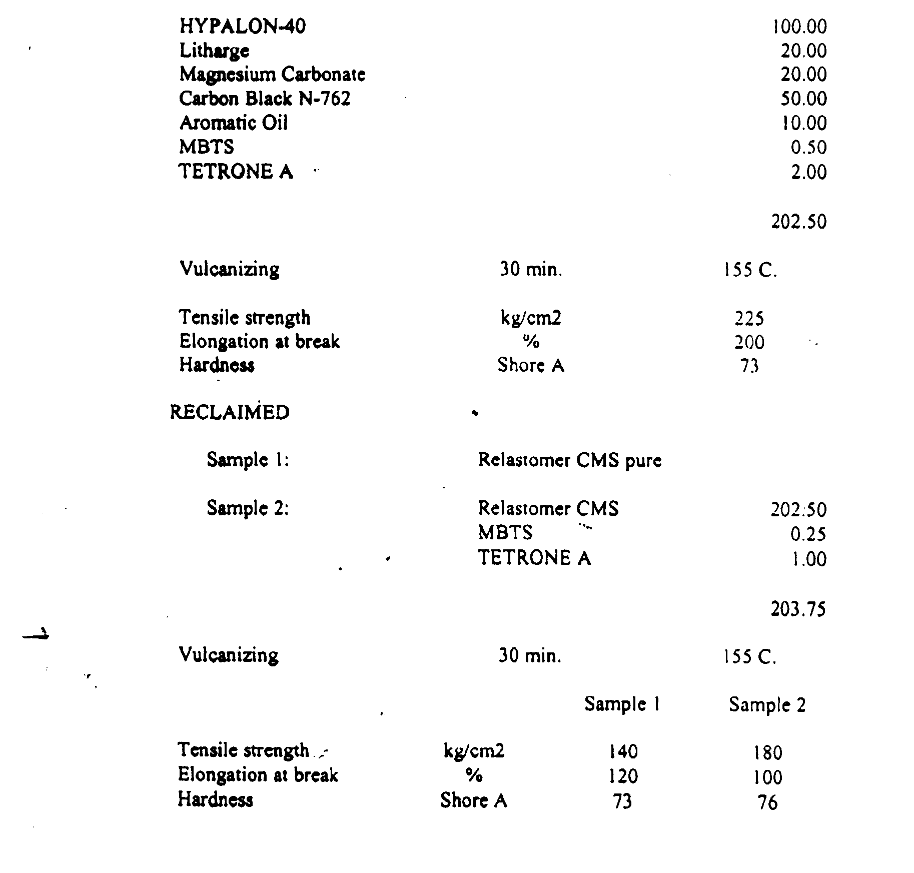

Sample # 8 It was prepared with the following FMK rubber formulation:

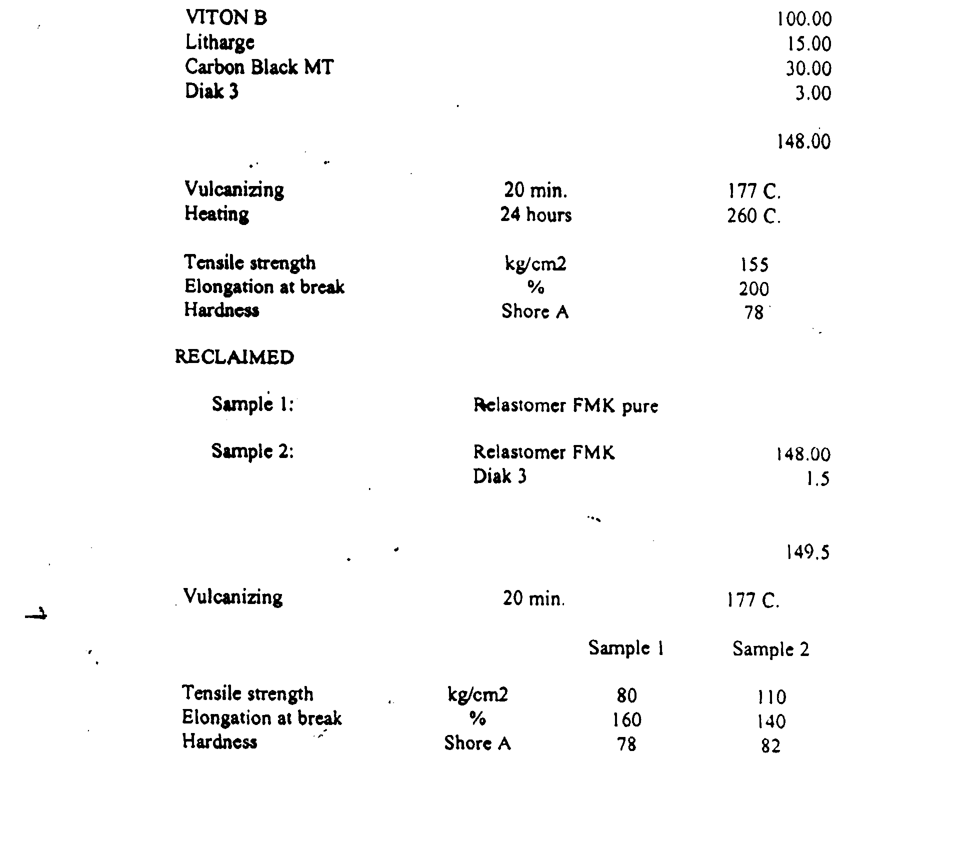

Sample # 9 It was prepared with the following EPDM rubber formulation:

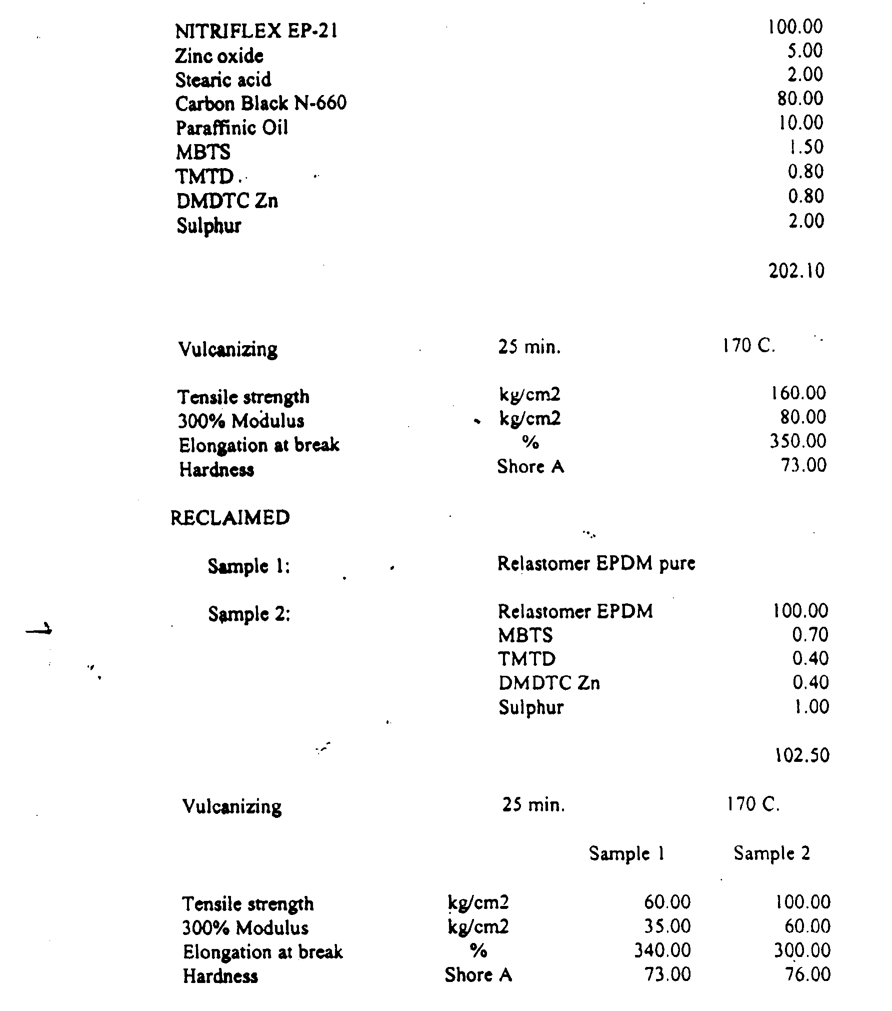

A basic composition was prepared as starting point for a comparison among the reclaim processes:
1. Basic composition;
2. Relastomer A - reclaim under a slurry mean for reducing particles by means of milling, Patent PI-8500981;
3. Reclaim - using autoclave and refiner under a dry process;
4. Relastomer B - reclaim under a slurry mean for reducing particles by means of their passing through restriction, as described in this Patent.

1. Basic composition;

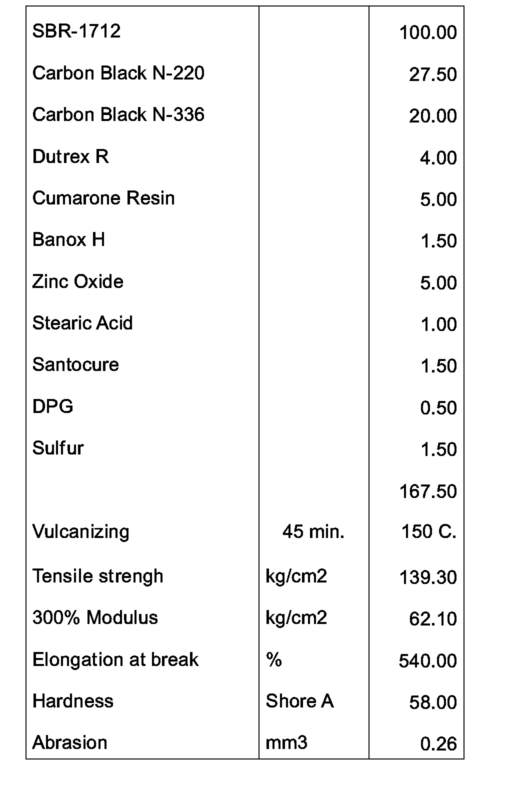

2. Relastomer A

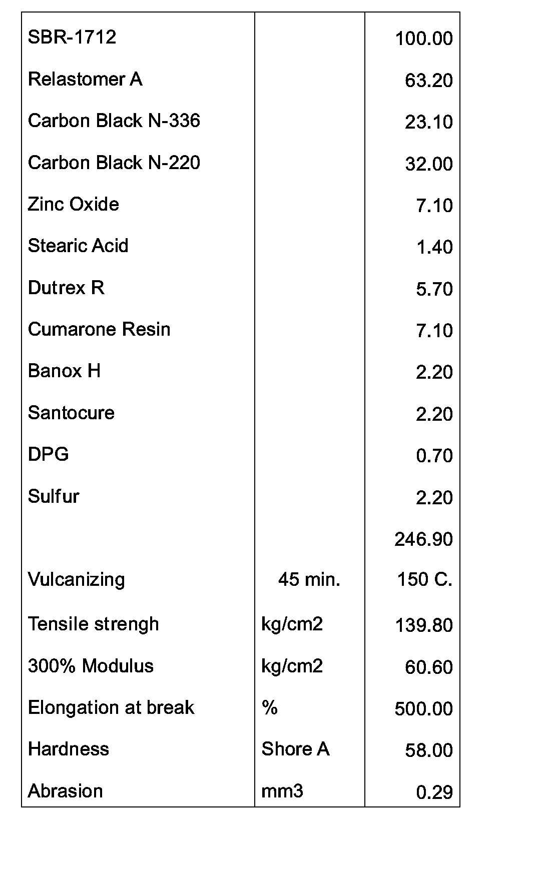

3. Reclaim - Usual Commercial Process

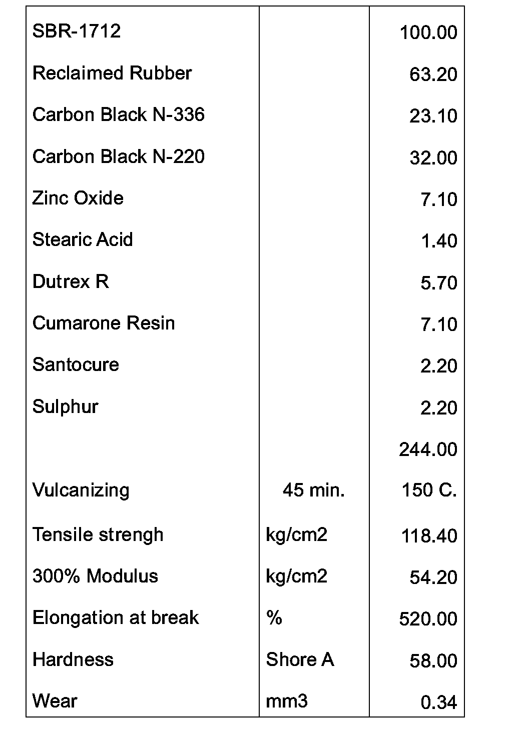

4. Relastomer B - A New Process

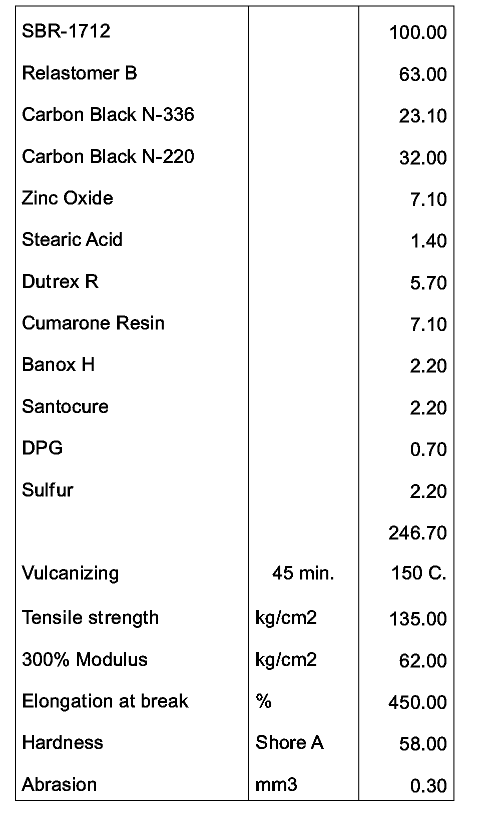

## Claims

1. Process to Reclaim Cured or Semi-Cured Rubber swollen in a proper solvent characterized by the submission of a swollen rubber mass to undergo through restrictions with or in deleterious or devulcanizing chemical elements.

2. Process pursuant to claim 1, characterized by the fact that restrictions be comprised by one or more perforated plaques, or screens, or sponges, or porous plaques or any other restrictions of the same kind or mixed among them.

3. Process pursuant to claim 1, characterized by the fact that the operation may be applied to any type of vulcanized, semi-vulcanized, cured, semi-cured rubber composition.

4. Process pursuant to claim 1, characterized by the fact that the operation may be applied either in a cold or hot manner.

5. Process pursuant to claim 1, characterized by the fact that the operation may be applied either at higher or lower pressure than the atmospheric pressure.
